# NEUE EUROPÄISCHE PATENTSCHRIFT

(11) **EP 1 897 437 B2**
(45) Veröffentlichungstag und Bekanntmachung des Hinweises auf die Entscheidung über den Einspruch: **15.08.2018**
(45) Hinweis auf die Patenterteilung: 08.04.2015
(21) Anmeldenummer: 07115636.8
(22) Anmeldetag: 04.09.2007
(51) Int. Cl.: B01J 20/28, A01K 1/015, B01J 20/10, C09K 3/32

(54) **Mineralisches Granulat, Verfahren zu seiner Herstellung und Verwendung des Granulats**
Mineral granulate, method for its manufacture and application of the granulate
Granulat minéral, son procédé de fabrication et utilisation du granulat

(30) Priorität: 05.09.2006 DE 102006041552
(43) Veröffentlichungstag der Anmeldung: 12.03.2008
(73) Patentinhaber: Xella Baustoffe GmbH, 47119 Duisburg (DE)
(72) Erfinder: Kornmayer, Ingrid, Dr., 80687 München (DE); Walther, Hartmut, Dr., 14806 Belzig (DE)
(74) Vertreter: Patent- und Rechtsanwälte Dr. Solf & Zapf

(56) Entgegenhaltungen:
- EP-A- 0 007 586
- EP-A- 0 716 806
- EP-A1- 0 007 586
- EP-A1- 0 716 806
- DE-A1- 19 839 240
- DE-A1- 19 839 240

## Beschreibung

Die Erfindung betrifft ein durch Granulierung hergestelltes mineralisches poröses Granulat sowie ein Verfahren zu dessen Herstellung und die Verwendung des Granulats. Derartige Granulate werden insbesondere als Adsorptionsmittel für flüssige Medien, z.B. als Tierstreu oder Ölbinder verwendet.

Bekannt ist, hoch saugfähige Granulate aus gebrochenem und klassiertem Poren- oder Schaumbetongranulat als Tierstreu zu verwenden. Bei derartigen Granulaten ist insbesondere von Vorteil, dass das Schüttgewicht lediglich 300 bis 500 g/l beträgt und das Granulat ein Abfallprodukt sein kann.

Bekannt sind ferner Granulate auf Bentonit-Basis. Bentonit ist ein hochsaugfähiges Tonmineral, welches nach dem Kontakt mit Wasser in erheblichem Maße aufquillt und Agglomerate bildet. Bei der Verwendung von Bentonit als Tierstreu bilden sich Klumpen, welche aus der restlichen Streu leicht entnommen und entsorgt werden können. Störende Geruchsentwicklung kann vermieden werden, indem mit Flüssigkeit kontaminierte Teile der Streu entfernt werden und die restliche Streu weiter verwendet wird, wodurch der Verbrauch an Tierstreu verringert werden kann. Nachteile einer Verwendung von reinem Bentonit sind die Kosten für den Rohstoff sowie das hohe Schüttgewicht von 900 bis 1.000 g/l. (Die Schüttgewichte sind im Rahmen der Erfindung nach DIN EN 1097-3: 1998 ermittelte Schüttgewichte).

Es wurden darüber hinaus bereits Bemühungen unternommen, die Vorteile beider Produkte mit einander zu verbinden.
Aus der DE 195 09 747 A1 ist ein poröses Granulat zur Ad- bzw. Absorption von Flüssigkeiten und Gasen, insbesondere zur Verwendung als Hygiene-Tierstreu bekannt, das aus mit einer Tonmineralkomponente bedeckten Porenbetonkörnern besteht und dessen Korngröße zwischen 0,5 und 4, vorzugsweise zwischen 0,5 und 2 mm liegen soll. Die Tonmineralkomponente soll in möglichst feinteiliger Form als Mehl vorliegen, wodurch die Quellfähigkeit begünstigt sein soll. Das poröse Trägermaterial soll je nach Herstellungsverfahren in unterschiedlichen Schüttgewichten und Korngrößen verfügbar sein, wobei Schüttgewichte von 300 und 400 g/l bevorzugt werden. Zur Herstellung werden Wasser und Bentonitmehl zu einer dünnbreiigen Schlämme aufbereitet, in welche Porenbetonmaterial mit einer Korngröße kleiner als 1,5 mm eingestreut werden. Diese Primärkörnung soll mikroporiges Calciumsilikat sein und im Mischvorgang mit einer gleichmäßigen Schichtdicke der Bentonitschlämme umhüllt werden, wobei die fertigen Granulate eine Größe von etwa 2 mm aufweisen sollen. Ein durchschnittliches Schüttgewicht dieser Granulate wird mit etwa 450 g/l angegeben. Der Anteil des hoch quellfähigen Tonminerals soll von 25 bis 50 Gew.-% reichen und der Anteil des Porenbeton- bzw. Calciumsilkathydratmaterials soll zwischen 50 bis 75 Gew.-% liegen. Im Querschnitt betrachtet weisen die Granulate einen relativ großen Kern aus porösem Calciumsilikathydrat-Material und einen im Verhältnis zum Kern dünnen Mantel aus Bentonit auf. Gemäß dieser Druckschrift kann darüber hinaus eine Wiederbefeuchtung der im Heißluftstrom getrockneten Granulate stattfinden, um weiteres feinteiliges Bentonit aufzupudern und so die Schichtdicke des Bentonits auf eine bestimmte Dicke zu vergrößern.

Aus der EP 0 716 806 A1 ist ebenfalls ein Granulat zur Verwendung als Tierstreu bekannt, bei dem 25 bis 70 Gewichtsanteile eines hoch quellfähigen Materials und 30 bis 75 Gewichtsteile eines Porenbetongranulats verwendet werden. Gemäß dieser Druckschrift ist es zusätzlich zu den Ausführungsformen gemäß der DE 195 09 747 A1 möglich, beide Materialien in der Art zu mischen, dass eine im Querschnitt homogene Struktur innerhalb der Granalie erzielt wird. Das Porenbetonmaterial soll zur Herstellung eines homogen aufgebauten Granulats Korngrößen < 0,5 mm bei einem Bentonitanteil um 25 Gew.-% aufweisen.

Des Weiteren ist aus der DE 198 43 887 B4 ein Hygienegranulat auf Basis von Calciumsilikathydrat und Bentonit bekannt, wonach das Granulat pelletierte Granalien mit einem zweischichtigen Aufbau mit einem Kern und einer Schale bzw. einem Mantel aufweist, wobei der Kern überwiegend Calciumsilikathydrat und der Mantel ein Gemisch aus feinteiligem, quellfähigem Tonmineral und feinteiligem Calciumsilikathydrat aufweist. Der Vorteil dieses Granulates besteht darin, dass der Mantel aus einem Gemisch aus feinteiligem, quellfähigem Tonmaterial und feinteiligem Calciumsilikathydrat bei der Aufnahme von Flüssigkeit nicht undurchlässig wird und somit ein relativ großer Anteil der Flüssigkeit in den Kern weitergeleitet werden kann.

Bei einer Verwendung derartiger Granulate als Tierstreu oder Pflanzgranulat ist eine besonders hohe Abriebstabilität wünschenswert, da die Granulate im direkten Wohn- bzw. Lebensbereich des Menschen Verwendung finden und somit keinen Staub bzw. Abrieb verursachen sollten.

In diesem Zusammenhang macht insbesondere die Verarbeitung und Bindung von mehlförmigem bzw. staubförmigem Material Probleme, indem bei der Herstellung das Material sich schlecht mischen und einbinden lässt und im fertigen Produkt zum Ablösen und damit zur Bildung von Abrieb und Staub neigt.

Aufgabe der vorliegenden Erfindung ist, ein Granulat zu schaffen, das ein hohes Adsorptionsvermögen und eine hohe Speicherkapazität für Flüssigkeiten sowie gute Festigkeiten, eine gute Abriebsstabilität und eine gute Geruchsbindung aufweist. Darüber hinaus soll das Granulat auch aus Abfallstoffen kostengünstig herstellbar und ein möglichst helles, insbesondere graues bis weißes Produkt sein. Des weiteren soll das Granulat nicht toxisch, umweltverträglich und bei normalen Raum- und Außentemperaturen temperaturstabil sein.

Es wurde überraschenderweise gefunden, dass ein Granulat aus Granalien sehr gute Adsorptionseigenschaften, insbesondere sehr gute Tierstreueigenschaften aufweist, das herstellbar ist aus mindestens einem mehlförmigen Calciumsilikathydrat-Material, wie feinteiligem bzw. mehlförmigem Poren- oder Schaumbetonmaterial. Das neue Granulat hat insbesondere auch eine relativ glatte Oberfläche und gewährleistet eine sehr große Wasseraufnahmemenge sowie eine relativ geringe Schüttdichte von z.B. < 650 g/l. Als besonderen Effekt weist das erfindungsgemäße Granulat grundsätzlich eine helle bis weiße gefällige Farbe auf und kann insbesondere aufgrund dessen auf einfache Weise eingefärbt werden.

Als weiterer Vorteil ist zu nennen, dass ein Ausgangsstoff des erfindungsgemäßen Granaliengranulats, nämlich Calciumsilikathydrat-Material, insbesondere als Poren- und/oder Schaumbetonabfallmaterial, insbesondere überwiegend Tobermorit als Mineral aufweisend, bei der Herstellung von Poren- und/oder Schaumbeton anfällt. Insbesondere fallen bei der industriellen Herstellung von Poren- und/oder Schaumbetonformkörpern als auch beim Aufteilen von Poren- und/oder Schaumbetonquadern Mehlfraktionen dieser Materialien an, die zur Herstellung des erfindungsgemäßen Granaliengranulats verwendet werden.

Die Granalien des Granulats weisen eine gute Kornfestigkeit für den Einsatz als Schüttgut und,eine gute Rieselfähigkeit und damit auch eine gute Verdichtbarkeit bei z.B. Vibrationseinwirkungen auf.

Die vorliegende Erfindung betrifft somit ein Granaliengranulat gemäß Anspruch 1, aufweisend Granalien, hergestellt durch Granulieren von Mischungen aus Wasser und Calciumsilikathydrat-Material in Mehlform.

Die vorliegende Erfindung betrifft ein mineralisches Granulat nach Anspruch 1, sowie seine Herstellung nach Anspruch 6 und seine Verwendung nach gemäß der Ansprüche 8-10.

Die gleichwertigen Begriffe mehlförmig oder pulverförmig oder staubförmig oder feinteilig bedeuten im Rahmen der vorliegenden Erfindung feinteilige Teilchengrößen in normaler, herstellungsbedingter Kornverteilung bis 1000 µm; körnig meint Korngrößen von 1000 µm bis z.B. 8 mm. (Im folgenden wird für die feinteiligen Fraktionen hauptsächlich der Begriff Mehl, oder Mehlfraktion oder mehlförmig verwendet.)

Unter Granalien, die das Granaliengranulat bilden, sind im Rahmen der Erfindung eigenfeste körnige Produkte zu verstehen, die durch ein agglomerierendes Granulierverfahren und nicht durch Brechen oder Mahlen hergestellt sind und die gut rieselfähig sind und deren Körner eine für den jeweiligen Anwendungszweck ausreichende bis sehr gute, relativ abriebfeste mechanische Eigenfestigkeit aufweisen. Aufgrund der Herstellung der Granalien ergibt sich ein relativ enger Korngrößenbereich z.B. mit Gaußscher Kornverteilung und annähernd einheitlicher geometrischer Form, z.B. mit Kugelform und/oder angenäherter Kugelform, der Granalien. Die Granalien werden vollständig aus Mehl bzw. Staub bzw. Pulver allein hergestellt, und zwar als Granalien mit abgerundeten Oberflächenkonturen. Das zur Herstellung der Granalien verwendeten Poren- und/oder Schaumbetonmaterial ist vorzugsweise Abfallmaterial aus der Poren- und/oder Schaumbetonproduktion, das zur Herstellung der erfindungsgemäßen Produkte gegebenenfalls aufbereitet, z.B. nachgebrochen oder gemahlen und klassiert wird.

Mit Calciumsilikathydrat-Material bzw. Porenbeton- und Schaumbetonmaterial wird im Rahmen der vorliegenden Erfindung ein insbesondere zumindest Mikroporen aufweisendes, vorzugsweise ein Mikroporen und aus Bläh- oder Schaumporen entstandene Makroporen aufweisendes synthetisches, hydrothermal erzeugtes Material bezeichnet. Es ist insbesondere ein Poren- und/oder Schaumbetonmaterial, insbesondere hauptsächlich das Mineral Tobermorit aufweisend, wobei das Poren- und/oder Schaumbetonmaterial Poren- und/oder Schaumbetonmehl ist.

Nach der Erfindung wird mindestens ein Mehl aus mindestens einem Calciumsilikathydrat-Material in einen sogenannten Pelletiermischer bzw. Granaliermischer eingebracht und im Mischer während des Mischens mit Wasser versetzt, z.B. besprüht oder bedüst, so dass eine Granulierung bzw. Agglomerierung bzw. Pelletbildung erfolgt. (Die Begriffe Granulierung, Agglomerierung und Pelletierung werden im Rahmen der vorliegenden Erfindung gleichwertig verwendet, bevorzugt jedoch Granulierung.)

Nach Erreichen eines Granaliengranulats mit vorbestimmter Granaliengröße und/oder Granaliengrößenverteilung des Granaliengranulats wird das Granulat dem Pelletiermischer entnommen und getrocknet.

Als Calciumsilikathydrat-Produkte werden aus einer CaO- und einer SiO₂-Komponente in üblicher Weise hydrathermal gehärtete, Mikroporen aufweisende Produkte verwendet, und/oder Calciumsilikathydrat-Produkte, die zusätzlich vor der Hydrothermalhärtung einem Blähprozess unterworfen worden sind, oder denen vor der Hydrothermalhärtung ein Schaum zugesetzt wurde, so dass im gehärteten Produkt neben aus Wasserkanälen und Kanälen zwischen CSH-Kristallen entstandenen Mikroporen auch Makroporen vorhanden sind. Letztere sind insbesondere Porenbeton- oder Schaumbetonprodukte, von denen im Rahmen der Erfindung die Abfallprodukte in körniger Form (Bruchprodukte) und in Mehlform (Staubprodukte) verwendet werden, um Abfallprobleme zu lösen. Die Bruchprodukte werden gemahlen, um granulierfähige Mehle zu erzeugen, sofern nicht genügend Staubabfallprodukte vorhanden sind.

Besonders geeignet sind Ausgangs-Calciumsilikathydrat-Produkte aus Mehl mit folgender Kornverteilung:

| | | | | | |
|---|---|---|---|---|---|
| 1000 | bis | 2000 | µm: | 3 | bis 8 Gew.-%, |
| 500 | bis | 1000 | µm: | 20 | bis 33 Gew.-%, |
| 125 | bis | 500 | µm: | 40 | bis 57 Gew.-%, |
| | bis | 125 | µm: | 20 | bis 35 Gew.-%, |

insbesondere

| | | | | | | | |
|---|---|---|---|---|---|---|---|
| 1000 | bis | 2000 | µm: | 4 | bis | 7 | Gew.-%, |
| 500 | bis | 1000 | µm: | 23 | bis | 27 | Gew.-%, |
| 125 | bis | 500 | µm: | 42 | bis | 48 | Gew.-%, |
| | bis | 125 | µm: | 23 | bis | 27 | Gew.-%. |

Es hat sich herausgestellt, dass sich insbesondere die Mehle aus Porenbeton- und Schaumbetonprodukten besonders gut granulieren lassen, offenbar weil deren Oberflächenstruktur in Kombination mit den Mikroporen die Agglomerierung begünstigt.

Die Mehlprodukte werden z.B. mit Wassergehalten von 2 bis 30 Gew.-%, insbesondere von 22 bis 35 Gew.-% und mit Mehlkorngrößen bis 1200 µm, insbesondere bis 1000 µm, sowie normalen Gauss'schen Kornverteilungen verwendet.

Dem zu granulierenden Material aus Mehl wird vorzugsweise während des Mischens Wasser in Mengen von 15 bis 50 Gew.-%, insbesondere von 20 bis 30 Gew.-% bezogen auf die Mehlmenge, z.B. durch Einsprühen oder Eindüsen in den Mischer zugesetzt und mit relativ geringer Mischenergie die Granulierung im Mischer bewirkt. Dabei werden die Mischkomponentenparameter und die Granulierenergie derart eingestellt, dass ein rieselfähiges Granulat mit relativ abriebfesten Granalien erzeugt wird, deren Raumform im wesentlichen gerundet, z.B. im wesentlichen kugelig ist, mit Korngrößen zwischen 1 und 3 mm, insbesondere zwischen 1,5 und 2,5 mm, sowie Wassergehalte zwischen 30 und 45 Gew.-%, insbesondere zwischen 36 und 39 Gew.-%, auf. Nach dem Trocknen beträgt der Wassergehalt insbesondere 3 bis 8 Gew.-%, und die Schüttdichte beträgt 450 bis 750 g/l, insbesondere 600 bis 700 g/l, und die Wasseraufnahme beträgt 70 bis 130 Gew.-%, insbesondere 80 bis 110 Gew.-%.

Zur Bindung von mitunter vorhandenem Reststaub auf den Granalien ist es zweckmäßig, in einem Nachgranulierprozeß Celluloseether, insbesondere in Form von Carboxymethylcellulose, z.B. von Alkalimetallcarboxymethylcellulose, wie Natriumcarboxymethylcellulose und/oder Kaliumcarboxymethylcellulose, zuzusetzen, vorzugsweise in Mengen von 0,2 bis 2 Gew.-%, insbesondere von 0,2 bis 1,0 Gew.-%, bezogen auf das Calciumsilikathydratprodukt. Die Celluloseether unterstützen das Granulieren.

Es liegt im Rahmen der Erfindung, weitere übliche Zusatzmittel, wie Farbstoffe, Duftstoffe, geruchsbindende Stoffe, Pigmente, Katalysatoren, Düngemittel oder Indikatoren zuzusetzen, z.B. Duftstoffe in Mengen bis 1 Gew.-%, bezogen auf die Trockensubstanz der Granalien.

Ein nach der Erfindung hergestelltes Granulat weist Granalien auf, die enthalten:

| | | | |
|---|---|---|---|
| 78 | bis | 97 | Gew.-% Calciumsilikathydrat-Materialmehl, |
| 3 | bis | 20 | Gew.-% adsorptiv gebundendes Wasser, nach Trocknung, |
| 0 | bis | 2 | Gew.-% Carboxymethylcellulose, |

insbesondere

| | | | |
|---|---|---|---|
| 90 | bis | 91 | Gew.-% Calciumsilikathydrat-Materialmehl, |
| 4 | bis | 9 | Gew.-% adsorptiv gebundendes Wasser, |
| 0 | bis | 1 | Gew.-% Carboxymethylcellulose, |

wobei das Granulat Schüttgewichte von 500 bis 750 g/l, insbesondere von 500 bis 600 g/l, und eine Wasseraufnahme von 70 bis 180 Gew.-%, insbesondere von 80 bis 130 Gew.-%, aufweist.

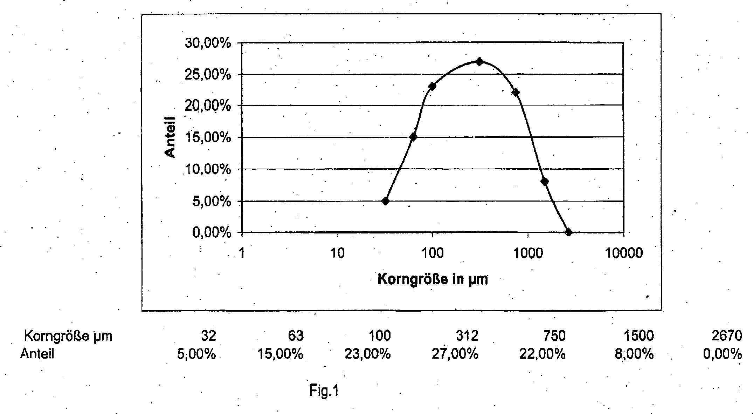

Nach einer nicht erfindungsgemäßen Ausführungsform der Erfindung wird ein Calciumsilikathydrat-Material granuliert, das als Ausgangsprodukt vor der Granulierung Korngrößen bis 2000 µm, insbesondere bis 1000 µm, und eine Gaußsche Kornverteilung aufweist, d.h., sowohl aus Mehlfraktionen als auch aus körnigen Fraktionen des Calciumsilikathydrat-Materials besteht. Die Kornverteilung eines solchen Produkts ist beispielhaft in Fig. 1 abgebildet. Dabei liegt der körnige Anteil mit Korngrößen zwischen 1000 µm und 5000 µm zweckmäßigerweise unter 80 Gew.-%, vorzugsweise unter 10 Gew.-%, insbesondere unter 8 Gew.-%.

Die Ausgangs-Calciumsilikathydrat-Produkte weisen die gleichen Wassergehalte wie die oben beschriebenen Calciumsilikathydrat-Mehlprodukte auf. Ebenso werden die gleichen Wassermengen zum Granulieren verwendet.

Die erzeugten Granalien weisen Korngrößen zwischen 0,3 und 10 mm, insbesondere zwischen 0,5 und 8,0 mm, und Wassergehalten zwischen 20 und 45 Gew.-%, insbesondere zwischen 32 und 40 Gew.-%. Das Granulat wird dem Mischer entnommen und getrocknet, bis z.B. Wassergehalte zwischen 3 und 8 Gew.-%, vorliegen. Diese Granulate weisen Schüttgewichte zwischen 450 und 750 g/l, insbesondere zwischen 500 und 600 g/l, auf. Die erfindungsgemäßen Granalien enthalten in ihrer Kornstruktur miteinander verkittete Mehlpartikel des Calciumsilikathydratprodukts.

Die Raumform dieser Granalien ist gut gerundet trotz der im Falle der Verwendung von körnigem Porenbeton- oder Schaumbeton-Ausgangs-Calciumsilikathydratmaterial unregelmäßigen zerklüfteten Oberflächenstruktur, in der noch Porenfragmente der Makroporen vorhanden sind. Die Granalien dieses Granulats bestehen entsprechend dem Ausgangsmaterial aus dem Calciumsilikathydrat-Produktpartikeln unterschiedlicher Größe.

Die Zusammensetzung der Granalien liegt im oben für die Mehle angegebenen Zusammensetzungsbereich bezüglich der Bestandteile Calciumsilikathydrat, Wasser nach Trocknung und Carboxymethylcellulose. Diese Granulate können die oben aufgeführten Zusatzmittel enthalten.

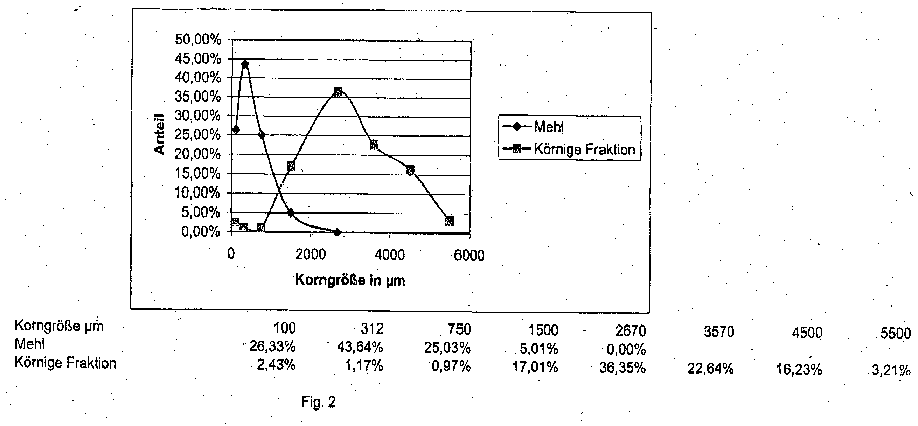

Eine weitere, nicht erfindungsgemäße Ausführungsform der Erfindung sieht vor, ein Calciumsilikathydrat-Materialgemenge mit einer sogenannten Ausfallkörnung zu verwenden, d.h., ein Calciumsilikathydrat-Materialmehl mit einem körnigen Calciumsilikathydrat-Material zu mischen, wobei Kornfraktionen zwischen den beiden Produkten fehlen oder nur in untergeordneten Mengen von z.B. unter 10 Gew.-%, vorzugsweise unter 5 Gew.-%, vorhanden sind. Beispielhaft wird eine derartige Zusammensetzung in Fig. 2 dargestellt. Fig. 2 zeigt die Kornverteilung eines Mehles (rhombische Punkte) und die Kornverteilung eines körnigen Produktes (quadratische Punkte), jeweils aus Porenbetonabfallmaterial. Die beiden Kornverteilungskurven schneiden sich bei Körnungen zwischen 1 und 2 mm. Die Körnungen im Bereich von 2 bis 0,5 mm liegen jeweils unter 10 Gew.-% und fallen unter den Begriff "Ausfallkörnung", wie er erfindungsgemäß verstanden werden soll.

Insofern werden Calciumsilikathydratmaterialmehle mit Korngrößen unter 1000 µm, insbesondere unter 500 µm, insbesondere mit Kornverteilungsmaxima unter 500 µm, mit körnigen Calciumsilikathydrat-Material-Kornfraktionen vermengt, die die folgenden Kornverteilungen aufweisen:

| | | | | | | | |
|---|---|---|---|---|---|---|---|
| > 7 | | | mm: | | bis | 10 | Gew.-%, |
| 5 | bis | 7 | mm: | 10 | bis | 30 | Gew.-%, |
| 4 | bis | 5 | mm: | 25 | bis | 40 | Gew.-%, |
| 3,15 | bis | 4 | mm: | 25 | bis | 40 | Gew.-%, |
| 1 | bis | 3,15 | mm: | 25 | bis | 40 | Gew.-%, |
| < 1 | | | mm: | | bis | 10 | Gew.-%, |

insbesondere

| | | | | | | |
|---|---|---|---|---|---|---|
| > 7 | | | mm: | | bis | 7 Gew.-% |
| 5 | bis | 7 | mm: | 10 | bis | 24 Gew.-%, |
| 4 | bis | 5 | mm: | 27 | bis | 34 Gew.-%, |
| 3,15 | bis | 4 | mm: | 27 | bis | 34 Gew.-%, |
| 1 | bis | 3,15 | mm: | 27 | bis | 34 Gew.-%, |
| < 1 | | | mm: | | bis | 4 Gew.-%. |

Das Kornverteilungsmaximum liegt z.B. zwischen 2,5 und 4 mm.

Die Mischungsverhältnisse von Mehlfraktion zu körniger Kornfraktion beträgt z.B.:
Mehlfraktion zu Kornfraktion = 3 zu 1 Gew.-% bis 2 zu 3, insbesondere 2 zu 1 Gew.-%.

Besonders vorteilhaft bei dieser nicht erfindungsgemäßen Ausführungsform der Erfindung ist, dass Granalien mit hoher Festigkeit erzielbar sind, deren Oberflächenstruktur zudem abgerundete Konturen und weniger Zerklüftungen aufweisen, weil die Porenfragmente der Makroporen weitestgehend durch die Mehlfraktionen abgedeckt sind. Zu dem gewährleisten diese Granalien besonders hohe Wasseraufnahmekapazitäten. Die Granulate entsprechen in ihrer Zusammensetzung der Zusammensetzung, die oben für die aus den Mehlen hergestellten Produkte angegeben sind. Die Granulate dieser Ausführungsform können außerdem auch die angegebenen Zusatzstoffe und Zusatzmittel enthalten. Sie sind vorzugsweise auch mit Celluloseether nachgranuliert.

Die Erfindung gelingt, wenn Mehlfraktionen mit Korngrößen unter 1000 µm, insbesondere unter 500 µm, verwendet werden. Die Erfindung gelingt nicht mit der erforderlichen Qualität der Granalien, wenn Mehlfraktionen fehlen oder nur in Mengen unter 20 Gew.-% vorhanden sind und nur körnige Calciumsilikathydrat-Materialien im Korngrößenbereich von 1000 bis 8000 µm, insbesondere von 1500 bis 5000 µm, granuliert werden. Werden feinere Mehle verwendet, verschiebt sich diese Grenze der Mehlzusammensetzungen auch noch unter 20 Gew.-%.

Es hat sich gezeigt, dass größere Granalien geringere Mehlkornanteile enthalten als kleinere.

## Patentansprüche

1. Mineralisches Granulat aus agglomerierten, zumindest mikroporösen, vorzugsweise Mikroporen und Makroporen aufweisenden Calciumsilikathydrat-Materialkörner aufweisenden Granalien mit einem Schüttgewicht nach DIN EN 1097-3: 1998, zwischen 500 und kleiner 750 g/l, einer Wasseraufnahme von 70 bis 180 Gew.-% und einem Mehlkornanteil in jeder Granalie mit Korngrößen unter 1000 µm von 100 Gew.-% bezogen auf die Trockensubstanz der Granalien, wobei die Granalien enthalten:
78 bis 97 Gew.-% Calciumsilikathydrat-Materialmehl
3 bis 20 Gew.-% adsorptiv gebundenes Wasser, nach Trocknung
0 bis 2 Gew.-% Carboxymethylcellulose.

2. Granulat nach Anspruch 1, **dadurch gekennzeichnet, dass** das Calciumsilikathydrat-Materialmehl mikroporös mit Porendurchmessern < 100 µm und makroporös mit Porendurchmessern über 500 µm ist.

3. Granulat nach Anspruch 2, **dadurch gekennzeichnet, dass** das Calciumsilikathydrat-Materialmehl aus Porenbeton- und/oder Schaumbetonmaterialmehl besteht.

4. Granulat nach einem oder mehreren der vorhergehenden Ansprüche, **gekennzeichnet durch** Korngrößen der Granalien zwischen 0,5 und 10,0 mm, insbesondere zwischen 0,5 und 8,0 mm.

5. Granulat nach einem oder mehreren der vorhergehenden Ansprüche, **dadurch gekennzeichnet, dass** die Granalien insbesondere zur Reststaubbindung Carboxymethylcellulose, vorzugsweise in Mengen von 0,1 bis 2,0 Gew.-%, insbesondere von 0,2 bis 1,0 Gew.-% aufweisen.

6. Verfahren zur Herstellung eines Granulats nach einem oder mehreren der vorhergehenden Ansprüche, **dadurch gekennzeichnet, dass** das Calciumsilikathydrat-Materialmehl einem Pelletiermischer aufgegeben und während des Mischens mit Wasser versetzt wird und durch Granulieren Granalien erzeugt werden, die Granalien dem Pelletiermischer entnommen und getrocknet werden.

7. Verfahren nach Anspruch 6, **dadurch gekennzeichnet, dass** ein Nachmischen durchgeführt und dabei Carboxymethylcellulose zur Reststaubbindung, vorzugsweise in Mengen von 0,1 bis 1,0 Gew.-%, bezogen auf die Mischung zugegeben wird.

8. Verwendung eines Granulats nach einem oder mehreren der Ansprüche 1 bis5, insbesondere hergestellt nach Anspruch 6 oder 7, als Tierstreu.

9. Verwendung eines Granulats nach einem oder mehreren der Ansprüche 1 bis 5, insbesondere hergestellt nach Anspruch 6 oder 7, als Schüttung im Bauwesen.

10. Verwendung eines Granulats nach einem oder mehreren der Ansprüche 1 bis 5, insbesondere hergestellt nach Anspruch 6 oder 7, als Öl- und/oder Chemikalienbinder.

## Claims

1. A granulated mineral material composed of agglomerated, at least microporous granules comprising calcium silicate hydrate material particles, preferably exhibiting micropores and macropores, having a bulk density according to DIN EN 1097-3: 1998 of between 500 and less than 750 g/l, a water absorption capacity of between 70 and 180 wt.% and a proportion of fine particles with particle sizes of under 1000 µm in each granule of 100 wt.%, based on the dry substance of the granules, wherein the granules contain:
78 to 97 wt.% calcium silicate hydrate material flour
3 to 20 wt.% adsorptively bound water after drying
0 to 2 wt.% carboxymethyl cellulose.

2. The granulated material according to claim 1, **characterised in that** the calcium silicate hydrate material flour is microporous with pore diameters of < 100 µm and macroporous with pore diameters of over 500 µm.

3. The granulated material according to claim 2, **characterised in that** the calcium silicate hydrate material flour consists of autoclaved aerated concrete and/or foamed concrete material flour.

4. The granulated material according to one or more of the foregoing claims, **characterised by** particle sizes of the granules of between 0.5 and 10.0 mm, in particular between 0.5 and 8.0 mm.

5. The granulated material according to one or more of the foregoing claims, **characterised in that** the granules comprise carboxymethyl cellulose, preferably in quantities of 0.1 to 2.0 wt.%, in particular of 0.2 to 1.0 wt.%, in particular for binding residual dust.

6. A process for the production of a granulated material according to one or more of the foregoing claims, **characterised in that** the calcium silicate hydrate material flour is placed in a pelletising mixer and water is added while mixing and granules are produced by granulation, the granules are removed from the pelletising mixer and dried.

7. The process according to claim 6, **characterised in that** post-mixing is carried out during which carboxymethyl cellulose is added to bind residual dust, preferably in quantities of 0.1 to 1.0 wt.%, based on the mixture.

8. Use of a granulated material according to one or more of claims 1 to 5, in particular produced according to claim 6 or 7, as animal litter.

9. Use of a granulated material according to one or more of claims 1 to 5, in particular produced according to claim 6 or 7, as fill in the construction industry.

10. Use of a granulated material according to one or more of claims 1 to 5, in particular produced according to claim 6 or 7, as an oil binder and/or chemical binder.

## Revendications

1. Granulat minéral fabriqué à partir de granulés agglomérés, au moins microporeux, présentant des grains de matériau à base d'hydrate de silicate de calcium, présentant de préférence des micropores et des macropores, ayant une densité apparente, selon la norme DIN EN 1097-3:1998, entre 500 and inférieure à 750 g/l, une capacité d'absorption d'eau entre 70 et 180 % en poids et une quantité de particules fines dans chaque granulé, dont la taille des grains est inférieure à 1000 µm, comprise 100 % en poids par rapport à la matière sèche des granulés, les granulés contenant :
de 78 à 97 % en poids de farine de matériau à base d'hydrate de silicate de calcium,
de 3 à 20 % en poids d'eau liée par adsorption, après séchage,
de 0 à 2 % en poids de carboxyméthylcellulose.

2. Granulat selon la revendication 1, **caractérisé en ce que** la farine de matériau à base d'hydrate de silicate de calcium est microporeux avec un diamètre de pores < 100 µm et macroporeux avec un diamètre de pores supérieur à 500 µm.

3. Granulat selon la revendication 2, **caractérisé en ce que** la farine de matériau à base d'hydrate de silicate de calcium se compose d'une farine de matériau à base de béton alvéolé et/ou de matériau à base de béton cellulaire.

4. Granulat selon l'une ou plusieurs des revendications précédentes , **caractérisé par** des tailles de grains des granulés comprises entre 0,5 et 10,0 mm, en particulier entre 0,5 et 8,0 mm.

5. Granulat selon l'une ou plusieurs des revendications précédentes, **caractérisé en ce que** les granulés, en particulier pour lier les poussières résiduelles, présentent de la carboxyméthylcellulose, de préférence en des quantités allant de 0,1 à 2,0 % en poids, en particulier de 0,2 à 1,0 % en poids.

6. Procédé de fabrication d'un granulat selon l'une ou plusieurs des revendications précédentes, **caractérisé en ce que** la farine de matériau à base d'hydrate de silicate de calcium est ajouté à un mélangeur-granulateur et pendant la phase de mélange est mélangé à de l'eau et des granulés sont produits par granulation, les granulés sont prélevés du mélangeur-granulateur, puis séchés.

7. Procédé selon la revendication 6, **caractérisé en ce que** le mélange est agité, puis de la carboxyméthylcellulose y est ajoutée, pour lier les poussières résiduelles, de préférence en des quantités allant de 0,1 à 1,0 % en poids par rapport au mélange.

8. Utilisation d'un granulat selon l'une ou plusieurs des revendications 1 à 5, fabriqué en particulier selon l'une des revendications 6 ou 7 en tant que litière pour animaux.

9. Utilisation d'un granulat selon l'une ou plusieurs des revendications 1 à 5, fabriqué en particulier selon l'une des revendications 6 ou 7 en tant que matériau de remblayage dans le secteur du bâtiment.

10. Utilisation d'un granulat selon l'une ou plusieurs des revendications 1 à 5, fabriqué en particulier selon l'une des revendications 6 ou 7 en tant que liant pour huiles et/ou liant pour produits chimiques.
